# EUROPEAN PATENT APPLICATION

(11) **EP 4 588 845 A1**
(43) Date of publication of application: **23.07.2025**
(21) Application number: 24153053.4
(22) Date of filing: 22.01.2024
(51) Int. Cl.: B65G 1/04, B65D 25/04, B65D 43/02, B65D 43/12

(54) **A CONTAINER**

(71) Applicant: AUTOSTORE TECHNOLOGY AS, 5578 Nedre Vats (NO)
(72) Inventor: JAKOBSEN, Jonas Neraal, 5578 Nedre Vats (NO)
(74) Representative: Kilburn & Strode LLP

(57) **Abstract**

The disclosure relates to a container configured to be stacked in an automated storage and retrieval system and to an automated storage and retrieval system. The container comprises a rack and a door. The rack is configured to support an item within an interior of the container. The door is on a first side of the container and is configured to provide access to the interior of the container.

## Description

### TECHNICAL FIELD

The disclosure relates to a container. More particularly, it relates to a container configured to be stacked in a column of containers in an automated storage and retrieval system, and to an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

An automated storage and retrieval system can provide a highly modular and efficient system for storage of goods and retrieval of goods. Typically all the containers are the same size and shape to enable this automation and efficiency to be provided. However, storing goods with large differences in size and shape within such systems can be difficult. Accommodating bulky, heavy or irregularly shaped goods within containers may lead to all of the containers needing to be particularly large, which may lead to space being wasted inside other containers storing smaller goods. In addition, some items have particular storage requirements which are difficult to reconcile with storage in typical containers because this would require folding the items or because it may be difficult to retrieve an individual item from a plurality of items stored within these typical containers.

A known approach is to accommodate the majority of goods in containers within a storage grid, and to store and process large, bulky or otherwise unwieldy items outside the storage grid. According to one example, the containers may have a footprint of 400mm x 600mm and a height of 425mm. Items which do not fit within such containers may be stored and processed manually or using automated guided vehicles (AGVs) or autonomous mobile robots (AMRs). This leads to additional complexity because an order comprising goods stored in containers and goods stored off-grid requires at least two separate retrieval processes and combining/reconciling of the goods retrieved via these separate processes. It also requires additional, less modular, storage space and additional retrieval time, and lowers the throughput of the storage and retrieval system.

As such, a problem with known containers in automated storage retrieval system is that it is difficult to accommodate a large variety of items. Accordingly, such systems are less versatile than would be desirable. Fulfilling an order using such systems may entail a greater number of processes or more complex processes than would be desirable and be more time-consuming than would be desirable. Moreover, attempting to accommodate a larger variety of items may lead to such systems being less space-efficient than would be desirable.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an embodiment of a grid as described herein;
Fig. 6 shows an embodiment of a container as described herein;
Fig. 7 shows another embodiment of a grid as described herein;
Fig. 8 shows an embodiment of a method for providing access to an item stored in a container as described herein.

### DETAILED DESCRIPTION

In overview the disclosure relates to a container configured to be stacked in a column of containers in an automated storage and retrieval system. In other words, the container is configured to be stacked vertically with other containers. The containers maybe configured to be stacked on top of each other in a self-supporting manner, and maybe configured for stacking between spaced vertical frame members of a storage grid/of the automated storage and retrieval system. A height of the container may be different to the heights of the other containers in the column of containers. The container includes a rack configured to support an item within an interior of the container. For example, the rack may be a rail, a shelf or a drawer. The object may be hung on or rest on the rack or part thereof. The object may be held above and separated from a bottom surface of the container by the rack, rather than resting on the bottom surface.

In some examples, a first item may be supported on the rack and a second item may be supported on the bottom surface of the container. In some examples, in which the rack comprises a rail, the rail may support items such as clothes on hangers hung on the rail. In some examples in which the rack comprises a fastener, for example a clip, clasp or tie, the fastener may fix an item such as a piece of sporting equipment at a particular position (e.g. a particular vertical position) within the container. In some examples, in which the rack comprises a shelf or drawer, the shelf or drawer may support one or more items thereon. The rack may comprise one or more different rack elements, including one or more rails, one or more fasteners, one or more shelves and/or one or more drawers, for supporting multiple items at different respective heights within the interior of the container.

As such, the rack can provide vertically discriminating storage within the container. This enables a greater variety of items to be stored within the container, for example items which require supporting in a particular way to avoid folding thereof or damage thereto. This vertically discriminating storage may also enable quicker and more efficient retrieval of a particular item from a plurality of items held within the container.

In some examples, the container may have a greater height than other containers of the automated storage and retrieval system. For example, the container may be equal to or greater than 1m in height. The container at least 2m in height and equal to or less than 3m in height. This may enable storage of items differing in size relative to other items stored in the storage grid, and/or may enable storage of long items not able to be folded or which it is desirable not to fold in case this damages the items. It may further enable long clothes to be hung within the container or bulky items such as sporting equipment to be fixed within the container.

The container includes a door on a first side of the container configured to provide access to the interior of the container. The door may be slidable or otherwise moveable such than at least one side of the container is at least partially open, which may enable an operator to retrieve an item from the container. Providing access to a side of the container may enable an item to be retrieved more easily, more quickly and/or with a lower chance of damage to the item relative to typical arrangements in which access is provided at the top of the container.

The features described above interact to enable increased versatility of an automated storage and retrieval system and a container configured to be stacked therein. The combination of the rack configured to support the item within the interior of the container and the door configured to provide side access to the interior of the container enable vertically discriminating/vertically subdivided storage of a variety of different objects while simultaneously providing easier access to retrieve these objects. Since the rack enables storage of an item at a particular height within the container, an operator can retrieve the item more easily, more quickly, and with less risk of damage to the item from a side of the container rather than reaching through from a top of the container. As such, both the storage and the retrieval provided by the system are improved, since the system is able to accommodate a more versatile range of object sizes, shapes and types and since access is provided to these objects which is particularly suitable for their sizes, shapes and types and for their positioning within the container.

### Automated storage and retrieval system overview

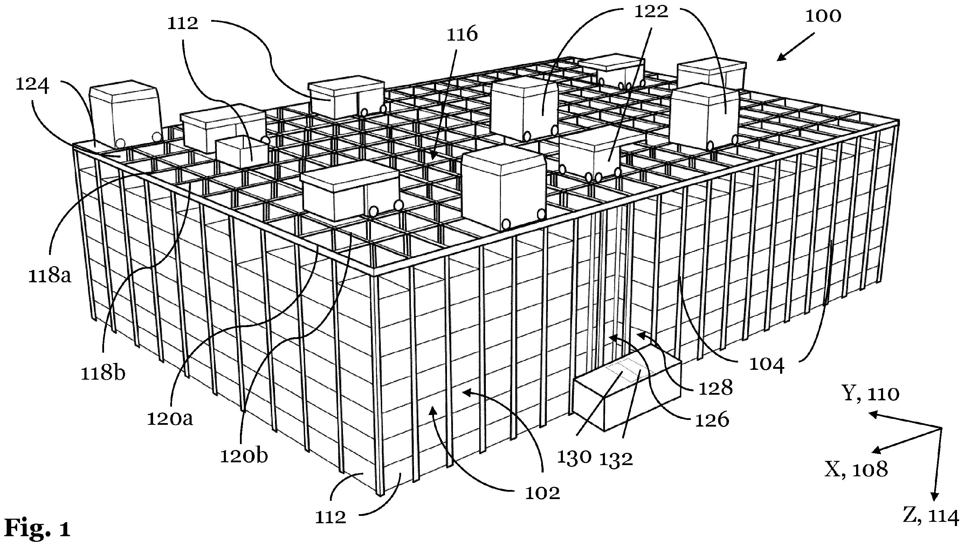

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

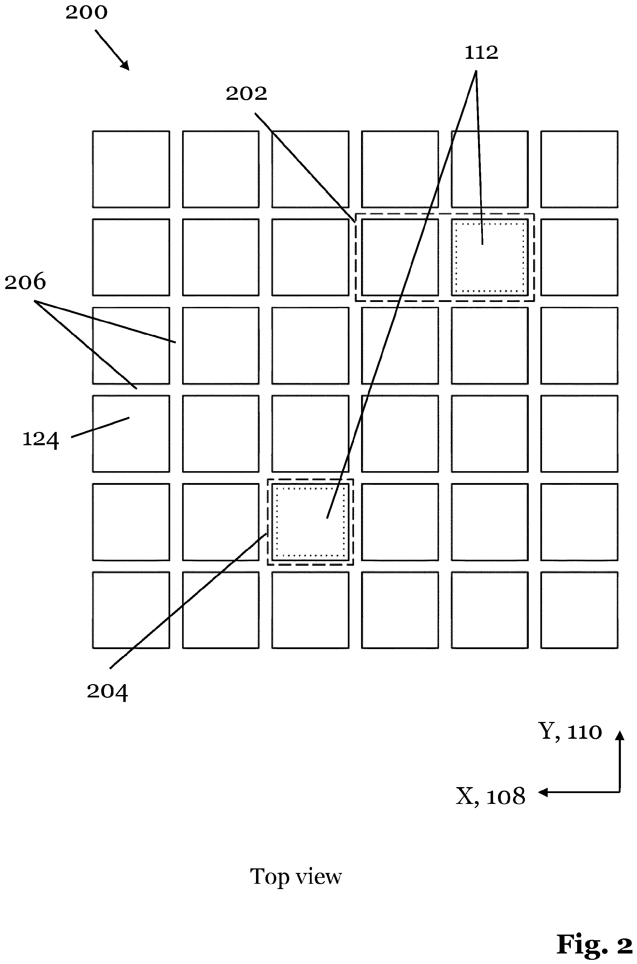

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

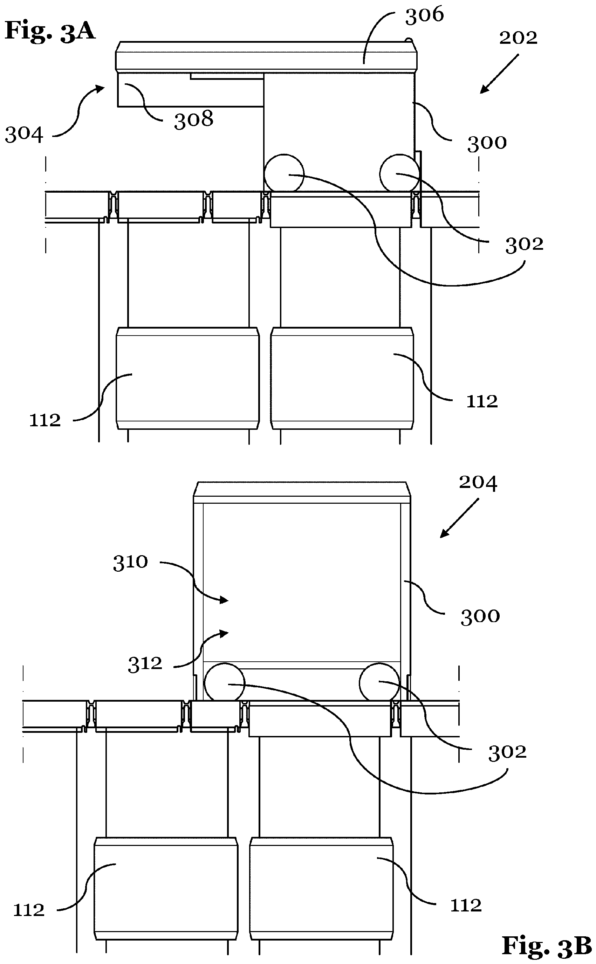

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

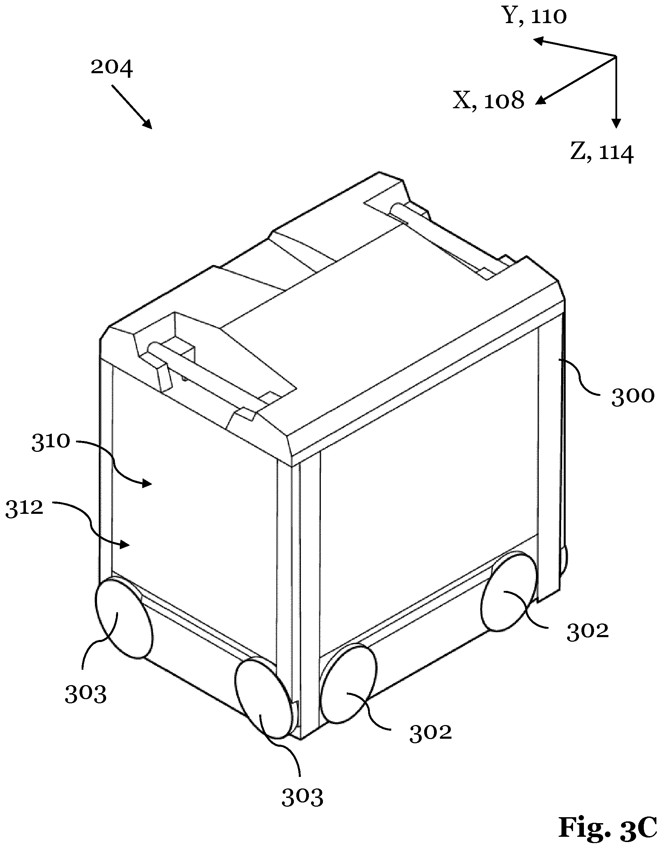

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

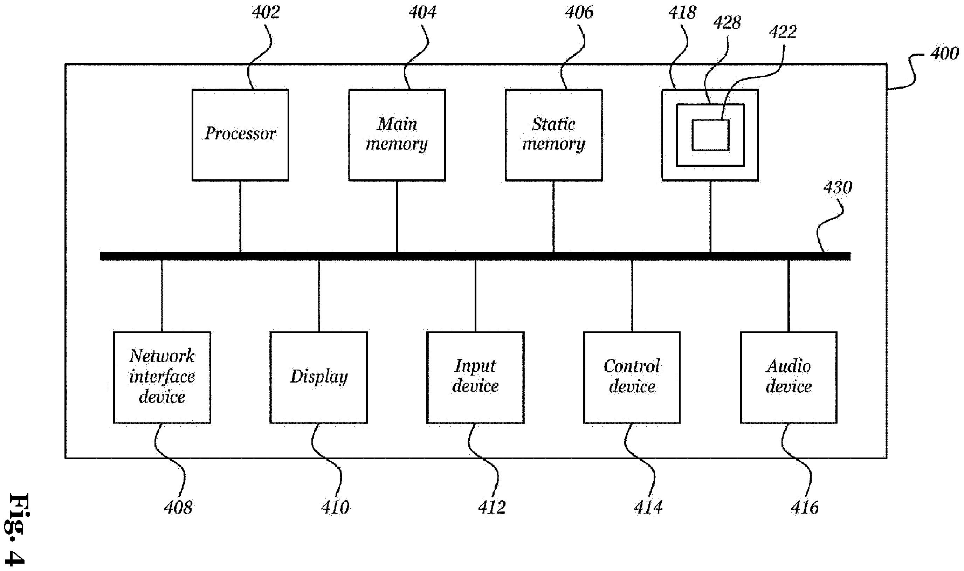

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

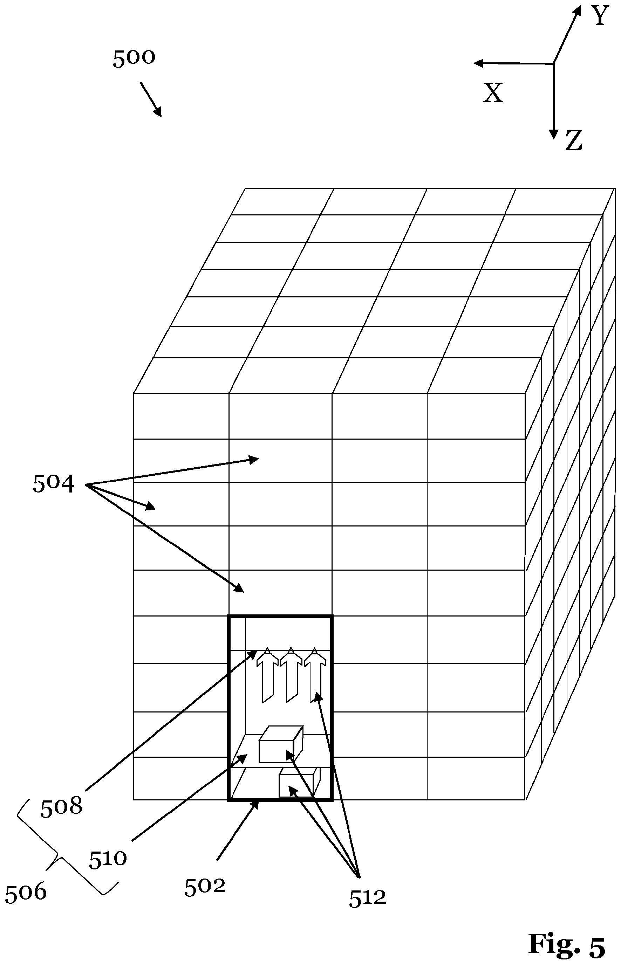

Referring to the embodiment shown in Fig. 5, a grid 500 is depicted. The grid 500 may correspond to the grid 100 referred to in relation to Fig. 1. The grid 500 is shown in simplified or schematic form for the purposes of describing features of the present disclosure. It will be appreciated that grids may be of various sizes and that the grid 500 may comprise a subset of a larger grid.

The grid comprises a container 502 and may also comprise additional containers 504 (only a subset of which are labelled in Fig. 5 for ease of illustration). Each of the container 502 and the additional containers 504 may generally correspond to the storage containers or bins 112 described in relation to Fig. 1. However, the container 502 includes a rack 506. The rack 506 is configured to support an item (generally labelled as 512) within an interior of the container 502. The rack may take various different forms as described in more detail below and Figure 5 merely provides one non-limiting example of this.

The rack 506 make be described as comprising one or more rack elements 508, 510. As depicted in Fig. 5, the rack 506 may comprise a rail 508 (towards the top of the container 502 in Fig. 5) and a shelf 510 (towards the bottom of the container 502 in Fig. 5). The rack 506 may support one or more items 512. Each rack element 508, 510 may support one or more respective items 512. As depicted in Fig. 5, by way of non-limiting example, the rail 508 may support one or more clothing items 512. As depicted in Fig. 5, by way of non-limiting example, the shelf 510 may support one or more boxed items 512.

As depicted in Fig. 5, the container 502 maybe stacked in a column of containers 502, 504 in the storage grid 500, i.e. in an automated storage and retrieval system. The rack 506 provides means for vertically discriminating or subdividing storage within the container 502. This enables storage of a greater variety of items 512 within the container 502. For example, the rail 508 fixes the clothing items 512 at a particular vertical position within the container 502, and allows them to be hung at that position. This improves the storage of clothing items 512, which may be less likely to be damaged when hanging on the rail 508 than when being disposed in a pile at the bottom of the container 502. The rack 506 may, alternatively or in addition, comprise one or more rails or fasteners for fixing long or bulky items 512 such as sporting equipment at a particular vertical position within the container 502. This may prevent damage to such items 512 which may otherwise be caused if they are merely resting in the bottom of the container 502 or otherwise free to move within the container 502.

The rack 506 may support one or more of the items 512 above a bottom surface of the container 502, i.e. at a non-zero distance above this bottom surface. This may provide more space-efficient storage through enabling different items 512 to be stored at different vertical positions within the container 502. Alternatively, or in addition, it may provide improved storage of items 512 which are not suitable for disposing on the bottom surface of the container 502, i.e. storage which is less likely to damage such items 512.

The rack elements 508, 510 comprised in the rack 506 may be varied depending on the particular items 512 it is desired to store within the container 502 and the shapes, sizes and risk of damage thereof. As such, the rack 506 enables a greater variety of items 512 to be stored and enables this to be performed in a more space-efficient manner through optimization of the interior storage of the container 512. In other words, the present disclosure further enhances the modularity and efficiency of the storage grid 500 through providing modularity and storage efficiency within an individual container 502 itself. This is achieved while keeping the container 502 within the storage grid 500 stacked with one or more further containers 502 and/or one or more additional containers 504, rather than requiring off-grid storage for the items 512.

By way of non-limiting example, the container 502 is depicted in Fig. 5 as having a greater height (in the Z-direction) than the additional containers 504, though this is not required. Providing the container 502 with a greater height than the additional containers 504, which may have a height the same or similar to the containers 112 of Fig. 1, may further increase the variety of the items 512 that can be stored in the container 502 and thereby further increase the versatility of the storage grid 500. For example, this may enable particularly long or bulky items 512 to be stored within the container 502, e.g. without any folding or bending of such items 512. In some examples, the height of the container 502 may be greater than or equal to 1m. In some examples, the height of the container may be greater than or equal to 1.1m, 1.2m, 1.3m, 1.4m, 1.5m, 1.6m, 1.7m, 1.8m, 1.9m, 2.0m, 2.1m, 2.2m, 2.3m, 2.4m, 2.5m, 2.6m, 2.7m, 2.8m, 2.9m or 3.0m. In some examples, the height of the container maybe at least 2m and maybe less than or equal to 3m.

While the container 502 is depicted in Fig. 5, by way of non-limiting example, as being located at an edge of the storage grid 500, the container 502 may also be located in an interior of the storage grid, i.e. one or more rows further back in the Y-direction. While the container 502 is depicted in Fig. 5, by way of non-limiting example, as being located at a bottom of the storage grid 500, the container 502 may also be located higher up in the storage grid, i.e. one or more rows further up in the Z-direction. The container 502 may also be in different locations in the X-direction. The container 502 may be moved to a port by a robot for access to the items 512 and then moved by the same or a different robot to be restored in the same or a different location in the storage grid 500. In other words, the location of the container 502 within the storage grid 500 may change dynamically with time.

As referred to in relation to Figs. 1-3b, a container 112 maybe lifted, moved and lowered to a port by a robot 122, 202, 204. The container 502 may be lifted, moved and lowered to a port by a robot in a corresponding manner such that repetition will be avoided. However, such a robot may be of increased size relative to the robots 102, 202, 204 if the container 502 is of increased size relative to the containers 112.

The container 502 may be lifted, moved and lowered by a cantilever robot similar to robot 202 depicted in Fig. 3a. For a robot maneuvering the container 502, the dimensions of the volume under the cantilever element 306 may correspond to (be equal to or slightly larger than) the dimensions of the container 502. In other words, if the container 502 is of increased height relative to the containers 112, the robot 202 may be of increased height (in the Z-direction) such that the container 502 can be accommodated under the cantilever element 306 without the bottom of the container 502 touching the rails 118, 120. Alternatively, or in addition, if the container 502 is of increased width (in the X-direction), as will be discussed in more detail below, the robot 202 will be of increased width in a corresponding manner such that the container 502 can be accommodated under the cantilever element 306 without the sides of the container 502 protruding beyond the footprint of the robot 202.

The container may be lifted, moved and lowered by an internal cavity robot similar to robot 204 depicted in Fig. 3b. For a robot maneuvering the container 502, the dimensions of the internal cavity 310 may correspond to (be equal to or slightly larger than) the dimensions of the container 502. In other words, if the container 502 is of increased height relative to the containers 112, the robot 204, and the internal cavity 310, may be of increased height (in the Z-direction) such that the container 502 can be accommodated within the internal cavity 310 without the bottom of the container 502 touching the rails 118, 120. Alternatively, or in addition, if the container 502 is of increased width (in the X-direction), as will be discussed in more detail below, the robot 204, and the internal cavity 310, will be of increased width in a corresponding manner such that the container 502 can be accommodated within the internal cavity 310.

The lifting device 304 and/or the gripping device 308 of the robot 202, 204 may be configured to retain the container 502 by holding it such that a lower surface of the container is held at a greater vertical height than a bottom of sets of wheels 302, 303 of the robot 202, 204, i.e. such that the container 502 does not interfere with or obstruct movement of the robot 202, 204 when it is holding the container 502.

As described in relation to Figs. 1-3b, the robot 202, 204 may lower the container 112 to a port 130, 132 via a port column 126, 128 in order for items stored within the container 112 to be retrieved by an operator at the port 130, 132. In a similar manner, the robot described above may lower the container 502 to a port via a port column 126, 128 in order for items 512 stored within the container 502 to be retrieved by an operator at the port. However, such a port may be of increased size relative to the ports 130, 132 if the container 502 is of increased size relative to the containers 112. The port used for accessing the container 502 may comprise an opening with corresponding dimensions to the container 502, i.e. to the dimensions of the container 502 in the X-Z plane from/through which the interior of the container 502 is accessed.

### Container door

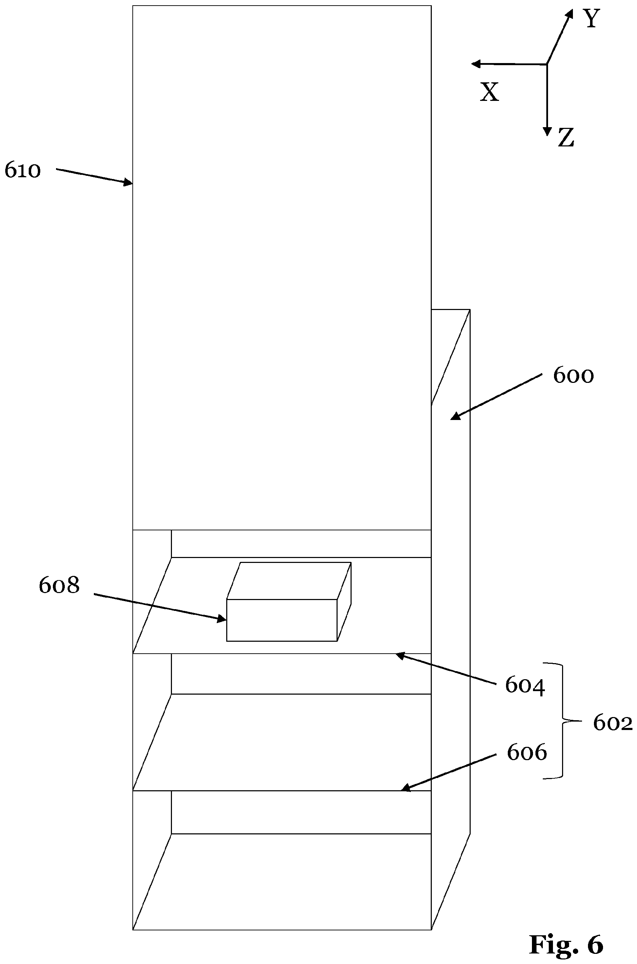

Referring to the embodiment shown in Fig. 6, a container 600 is depicted. The container 600 may correspond to the container 502 referred to in relation to Fig. 5. The container 600 comprises a rack 602, which may comprise one or more rack elements 604, 606. The rack 602 may correspond to the rack 506 described in relation to Fig. 5. The rack elements 604, 606 may correspond to the rack elements 508, 510 described in relation to Fig. 5. By way of non-limiting example, Fig. 6 depicts the rack elements 604, 606 as shelves, though the rack 602 may comprise alternative or additional rack elements as described herein. The rack 602 supports an item 608 within an interior of the container 600. By way of non-limiting example, and for ease of illustration, the item 608 is shown as taking a simple box form and is depicted as being supported by the rack element 604. Alternative or additional items, in particular those with large, bulky or irregular shapes, or those that require fixing or hanging from the rack 602, are explicitly considered herein within the present disclosure.

The container 600 comprises a door 610. The door 610 is on a first side of the container 600. In other words, the door 610 may not be disposed on a bottom of the container or the top of the container (in the X-Y plane), but may be disposed on a side of the container (in the X-Z or Y-Z plane). As depicted in Fig. 6, the door 610, i.e. the first side of the container 600, is in the X-Z plane. The position of the door 610 may be described as being at a 'front' of the container 600 relative to the edge of the storage grid 500 or relative to a port therein. In other words, at least at a port, the door 610 may be oriented such that it faces outwards from the storage grid 500 rather than into the storage grid 500 (in the Y-direction), such that opening of the door 610 provides access to the item 608 to an operator on the outside of the storage grid 500.

The door 610 is configured to provide access to the interior of the container 600. The door 610 may take any form suitable for providing this access. For example, the door 610 may be a hinged door with a hinge connecting the door 610 to the rest of the container 600 at one side of the door 610 (e.g. the left or right side as depicted in Fig. 6). This door 610 may be opened to provide access to the interior of the container 600 by pivoting the door 610 about the hinge. Alternatively, the door 610 may be a concertina, folding or curtain style door configured to fold so as to reduce its width (e.g. towards the left or right side as depicted in Fig. 6) and thereby provide access to the interior of the container 600. The container 600 may have different, independently moveable doors 610 for different sections of the container 600, e.g. for different vertical positions within the container 600.

As depicted in Fig. 6 by way of non-limiting example, the door 610 may be a sliding door. In other words, the door 610 may be configured to slide such that it no longer overlaps, or such that it no longer completely overlaps, the side of the container 600 it is configured to cover. As depicted in Fig. 6 by way of non-limiting example, the door 610 may be slidable in a vertical direction (aligned with the Z-axis). The door 610 maybe slidable upwards to provide access to the interior of the container 600. The door 610 may be slidable downwards to subsequently close the container 600, i.e. to no longer provide access to the interior of the container 600.

A drive mechanism may be configured to move, e.g. slide, the door 610. The drive mechanism may be disposed in the container 600. The drive mechanism may be disposed in a port such that the door 610 can be lifted (only) when the container 600 is disposed at the port. As would be understood by the skilled person, the drive mechanism may take any suitable form for moving the door. For example, the drive mechanism may comprise one or more motors and one or more belts or pulleys coupling the one or more motors to the door 610. Operation of the one or more motors may move the door 610, for example slide it upwards or downwards. The drive mechanism may comprise one or more actuators coupled to the door 610. Operation of the one or more actuators may move the door 610, for example slide it upwards or downwards. The drive mechanism may comprise a controller within the container 600 or the port and configured to control operation of the drive mechanism. Alternatively, or in combination, the door may be manually slidable by an operator.

The container 600, on the side at which the door 610 is located, may comprise one or more guide slots or guide rails for keeping the door 610 aligned with the rest of the container 600 in the X-direction (these may be located on the left and right sides of the container 600 as depicted in Fig. 6). This may ensure that the sliding of the door is aligned with the Z-axis. The door 610 and the container 600, on the side at which the door 610 is located, may comprise one or more interlocking or cooperating features to ensure this alignment.

In some examples, the container 600 may comprise multiple doors 610. For example, the container 600 may comprise an additional door 610 on a `back' side of the container 600, i.e. opposite the door 610 depicted in Fig. 6, also in the X-Z plane. The container 600 may comprise one or two additional doors 610 on the left and/or right side of the container 600, i.e. in the Y-Z plane. Such additional doors 610 may provide additional flexibility as to the orientations from which access to the interior of the container 600 is provided, which can provide additional flexibility regarding the locations and orientations of ports on different sides of the storage grid 500. The container 600 may also comprise a door 610 or an opening on the top of the container 600 (i.e. in the Y-X plane).

When the container 600 is stored within the storage grid 500, i.e. when items 608 therein are not being accessed, the door 610 may be closed. When the container 600 is moving, e.g. being lifted, translated or lowered by a robot, the door 610 maybe closed. When the container 600 is located at a port or edge of the grid or other access station, the door 610 may be open/opened so as to provide access to the interior of the container 610. Keeping the door 610 closed during storage and/or movement may prevent items 608 from falling out of the container 600 or becoming damaged or causing damage to other parts of the automated storage and retrieval system. The container may comprise a locking mechanism which may be unlocked when the container 600 is positioned at the port or edge of the grid or other access station, for example by using a sensor configured to identify a location of the container 600 or by an unlocking mechanism included in the port or access station and configured to cooperate with the locking mechanism. The locking mechanism may be manually unlockable by an operator, for example with a mechanical or electronic key.

The door 610 may be configured to slide to one of a plurality of predetermined vertical positions dependent on a vertical position of the item 608 within the container 600 and/or dependent on a vertical position of a rack element 602, 604 supporting the item 608. In other words, the door 610 may only be opened to the extent necessary to provide access to the item 608 that it is desired to retrieve. As depicted in Fig. 6, the door 610 may slide upwards to a height adequate for an operator to access the item 608 on rack element 604, but may not slide higher to provide access to any further items on any higher rack elements within the container 600. This may reduce the power required to slide open the door 610, thereby improving energy efficiency. Moreover, it may reduce the time needed to retrieve items 608 since the door 610 need only move through a smaller range of positions.

The locations of different items within containers, and the vertical heights of these within the containers, may be stored in a database, for example in the memory 404 of the processing system 400. When a particular item 608 is included in an order such that there is a need to retrieve it from the storage grid, this database may be consulted (e.g. searched) to determine the container 600 storing the item 608 and the vertical height of the item 608 within the container 600. This may be performed by the processing system 400 or by a controller of the port or by a controller of the container 600. The port or the container 600 may be configured to drive upward sliding of the door 610 to an extent necessary to expose the item 608 within the interior of the container and thereby enable its retrieval. This may be a partial upward sliding of the door 610 which does not expose the whole interior of the container 600.

### Lowering of container and use of platform

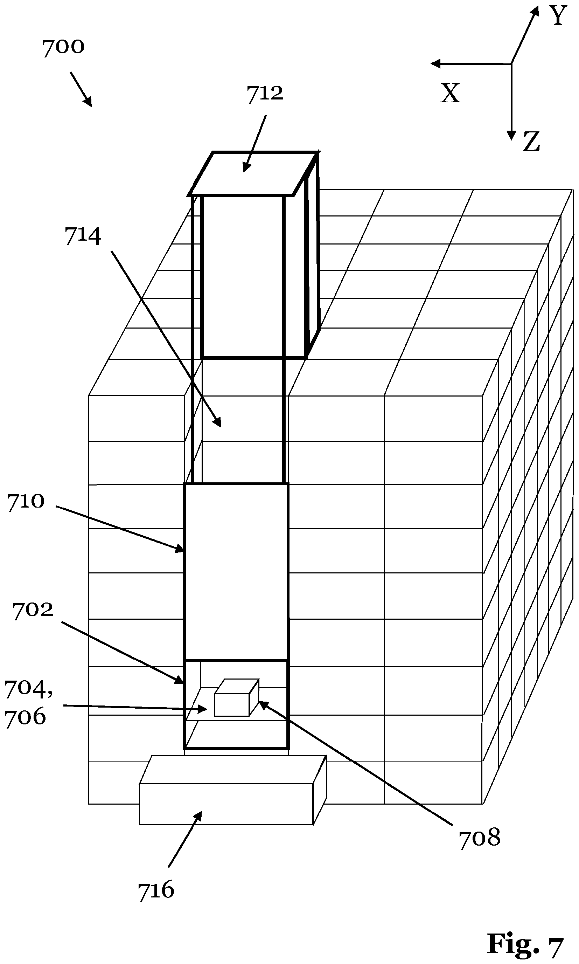

Referring to the embodiment shown in Fig. 7, a grid 700 is depicted. The grid 700 may generally correspond to the grid 500 referred to in relation to Fig. 5. The grid 500 comprises a container 702, which may correspond to the containers 502 and 600 referred to in relation to Figs. 5 and 6 respectively. The container 702 comprises a rack 704 which comprises a rack element 706 and which supports an item 708 within an interior of the container 702. The rack 704 may correspond to the rack 506, 602 described in relation to Figs. 5 and 6 respectively. The rack element 706 may correspond to the rack elements 508/510, 604/606 described in relation to Figs. 5 and 6 respectively. The item 708 may correspond to the item 512, 608 described in relation to Figs. 5 and 6 respectively. The container 702 comprises a door 710, which may correspond to the door 610 described in relation to Fig. 6.

The grid 700 comprises a robot 712. As described above, the robot 712 may be a cantilevered robot or an internal cavity robot (Fig. 7 depicts a cantilevered robot by way of non-limiting example). The robot 712 may have dimensions adequate for holding, lowering, translating and lifting the container 702. As described above, the robot 712 may comprise a plurality of wheels for moving along rails on top of the grid 700 in order to move a container 702 held by the robot 712 from a location within the grid 700 in which it is stored to an edge of the grid 700, for example to a port. As depicted in Fig. 7, the robot 712 has moved adjacent to a port column 714 (which may correspond to the port columns 126, 128 described in relation to Fig. 1), with the container 702 aligned vertically with the port column 714. The port may be an example of the ports 130, 132 described in relation to Fig. 1.

The robot 712 may be configured to lower the container 702 (as depicted in Fig. 7) down the port column 714. A port may be provided in the port column 714, for example at or close to the bottom of the port column 714. The port may comprise an opening in an exterior wall of the grid 700 providing access to the container 702 by an operator. The port may be referred to as an access station, an opening in a side of the grid, a workstation, a container handling station or a picking station herein. The port may comprise a body or housing separating and interior of the port from an exterior of the port. The port may comprise one or more conveyors for translating the containers described herein out of the grid 700, e.g. along in the Y-direction. The port may comprise a port door. The port may comprise a controller and a drive mechanism coupled to the port door. The controller may instruct the drive mechanism to close the port door when no container 702 is present at the port and to open the port door when a container 702 is present at the port. The port door may take any suitable form, such as a vertically or laterally sliding door, a hinged door or a concertina or folding door.

The door 710 of the container 702 may be opened as the container 702 is being lowered down the port column 714 or once the container 702 has reached the port. The port may open both the door 710 of the container 702 and the port door at the same time, for example using the same drive mechanism coupled to both the door 710 of the container and the port door. The port may be configured to provide side access to the container 702, i.e. to the interior of the container 702, through opening of the port door. In other words, the port may be configured to provide access to the interior of the container 702 in/through the X-Y plane to correspond to the access provided by the door 710 of the container 702.

A platform 716 may be provided adjacent to the port, i.e. adjacent to the port column 714 of the grid 700. An operator may stand on the platform 714 in order to access the interior of the container 702. The robot 712 may lower the container 702 (only) a distance such that the item 708/the rack element 706 it rests on is a predetermined distance (e.g. approximately 1m) above the platform, i.e. instead of necessarily lowering the container 702 all the way to the bottom of the port column 714 each time. This may reduce the power required to lower the container 702, thereby improving energy efficiency. Moreover, it may reduce the time needed to retrieve items 708 since the container 702 need only move through a smaller range of positions. This lowering of the container 702 in dependence on the vertical position of the item 708/the rack element 706 supporting it may be implemented in combination with the sliding of the door 710 in dependence on the vertical position of the item 708/the rack element 706.

As explained above, the locations of different items within containers, and the vertical heights of these within the containers, may be stored in a database, for example in the memory 404 of the processing system 400. When a particular item 708 is included in an order such that there is a need to retrieve it from the storage grid, this database maybe consulted (e.g. searched) to determine the container 702 storing the item 708 and the vertical height of the item 708 within the container 702. This may be performed by the processing system 400 or by a controller of the robot 202, 204. The robot 202, 204 may be configured to lower the container 702 to an extent necessary to dispose the item 708 at an appropriate height (e.g. 1m) above the platform 716, but lower it no further. This may be a partial lowering of the container 702 such that the container 702 is not lowered to the bottom (ground-level) of the grid 700.

### Further description of rack elements

The rack described herein, for example in relation to Figs. 5-7, may comprise at least one horizontal element (which may be one of the rack elements described herein). This horizontal element maybe coupled to a second side and to a third side of the container. The second side may be adjacent to a first edge of the first side at which the door is located. The third side may be adjacent to a second edge of the first side at which the door is located. The third side may be opposite to the third side. In other words, referring for example to Fig. 7, where the door/first side is located in the X-Z plane, the second side and the third side may each be located in the Y-Z plane and may be separated from each other in the X-direction.

The at least one horizontal element may further enable vertically discrimination/sub-divided storage, and may further enable support of one or more items at a non-zero height above a bottom surface of the container. This may provide more suitable, less damage-prone storage of items and more space-efficient storage of items. As such, this may enable more efficient and more reliable storage of a greater variety of items within containers of the storage grid.

In addition, the rack may comprise one or more vertical elements, i.e. extending in the Z-direction as depicted in Fig. 7 for example. The one or more vertical elements may sub-divide the container into two or more horizontal compartments so as to provide further modularity and space-efficiency.

### Different widths of containers

The containers 502, 600, 702 described herein may have the same width as the containers 112 described in relation to Fig. 1 (which may by way of non-limiting example be approximately 400mm or approximately 600mm. These containers 502, 600, 702 may be described as having a 'single-cell width', since they may have a width (in the X-direction) which corresponds to the width of a storage cell of the grid. Alternatively, the containers 502, 600, 702 may have a 'double-cell width', with a width (in the X-direction) double the width of a storage cell of the grid/double the width of the containers 112. Alternatively, the containers 502, 600, 702 may have a 'triple-cell width', with a width (in the X-direction) triple the width of a storage cell of the grid/triple the width of the containers 112.

Containers 502, 600, 702 with increased width may further enable storage of a greater variety of items therewithin. Moreover, containers 502, 600, 702 with increased width may have increased stability, especially when these containers 502, 600, 702 have increased height relative to the containers 112.

The robots, ports and separation of vertical frame members 104 may be dimensioned to as to be configured to accommodate the width of container 502, 600, 702 that is used. For example, a robot may be provided which has a corresponding width to the container 502, 600, 702. Similarly, a port (and port column 714) may be provided which has a corresponding width to the container 502, 600, 702. Similarly, a separation between adjacent vertical frame members 104 may be provided which corresponds to the width of the container 502, 600, 702. For example, relative to the embodiment shown in Fig. 1, one of the vertical frame members 104 may not be present if it is desired to accommodate a 'double-cell width' container 502, 600, 702. Relative to the embodiment shown in Fig. 1, two adjacent vertical frame members 104 may not be present if it is desired to accommodate a 'triple-cell width' container 502, 600, 702. This may effectively combine two or more cells so that double or triple width containers 502, 600, 702 can be raised and lowered within the interior of the grid and within a port column 714. In some examples, such changes to the locations of the vertical frame members 104 may only be present in a subset of the grid dedicated to storing such double or triple width containers 502, 600, 702.

### Methods

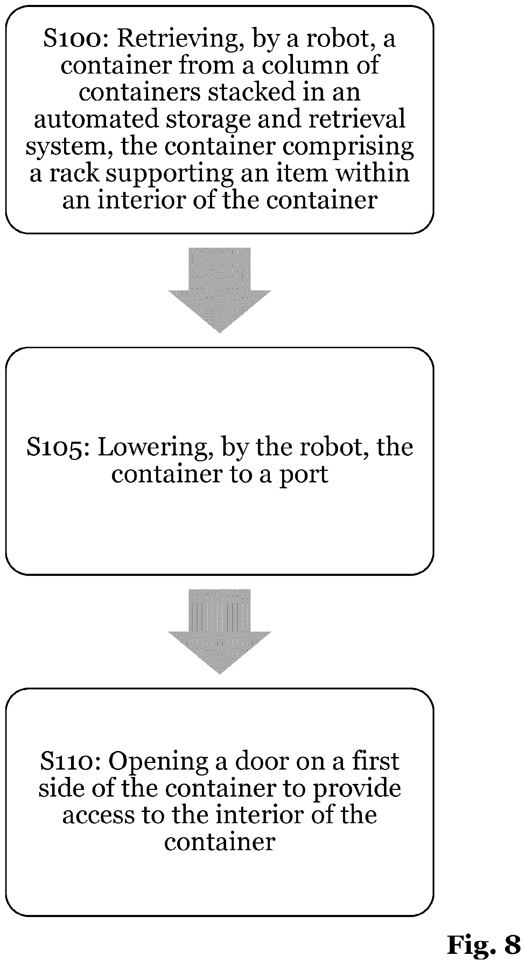

Referring to the embodiment shown in Fig. 8, a method for providing access to an item stored in a container is shown. The container may correspond to any of the containers 502, 600, 702 described in relation to Figs. 5-7.

In a step S100, the method comprises retrieving, by a robot, a container from a column of containers stacked in an automated storage and retrieval system, the container comprising a rack supporting an item within an interior of the container. The robot may correspond to the robot 712 described in relation to Fig. 7. The automated storage and retrieval system may correspond to the grid 500 and/or the grid 700 described in relation to Figs. 5 and 7 respectively. The rack may correspond to the rack 506 and/or the rack 602 and/or the rack 704 described in relation to Figs. 5-7 respectively. The item may correspond to the item(s) 512 and/or the item 608 and/or the item 708 described in relation to Figs. 5-7 respectively.

The retrieving of the container may comprise lifting the container by the robot. The retrieving of the container may comprise transporting of the container by the robot along the rail system 116 of the automated storage and retrieval system to a port column 714 comprising the port. Before lifting the container, the robot may sequentially lift and redeposit containers having been above the container in the column of containers. A height of the container may be at least 1m. The height of the container may be at least 2m and equal to or less than 3m. The height of the container may be greater than a height of at least one of the (other) containers of the column of containers.

In a step S105, the method comprises lowering, by the robot, the container to a port. The port may correspond to the port provided in the port column 714 described in relation to Fig. 7. The lowering may include lowering of the container a predetermined distance dependent on a vertical position of the item within the container. The vertical position of the item may be stored in a database stored in a memory of the robot or in a memory of a device (e.g. processing system 400) to which the robot is communicatively coupled to.

In a step S110, the method comprises opening a door on a first side of the container to provide access to the interior of the container. The door may correspond to the door 610 and/or the door 710 described in relation to Figs. 6 and 7 respectively. The opening of the door may comprise moving/opening of the door by a drive mechanism comprised in the port or in the container. The opening of the door may include sliding the door vertically upwards. The opening of the door may include sliding the door to one of a plurality of predetermined vertical positions dependent on a vertical position of the item within the container. The vertical position of the item may be stored in a database stored in a memory comprised in the port or in the container or in a memory of a device (e.g. processing system 400) to which the port/container is communicatively coupled to. A door of the port may be opened to expose an opening through which an operator can access the interior of the container when the door of the container is itself also in an open position.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The disclosure comprises the following items:
1. A method for providing access to an item stored in a container, the method comprising:
   retrieving, by a robot, a container from a column of containers stacked in an automated storage and retrieval system, the container comprising a rack supporting an item within an interior of the container;
   lowering, by the robot, the container to a port; and
   opening a door on a first side of the container to provide access to the interior of the container.
2. A method according to item 1, wherein the opening of the door comprises sliding the door vertically upwards.
3. A method according to item 2, comprising sliding the door to one of a plurality of predetermined vertical positions dependent on a vertical position of the item within the container.
4. A method according to any preceding item, wherein the lowering of the container comprises lowering the container a predetermined distance dependent on a vertical position of the item within the container.
5. A method according to any preceding item, wherein the retrieving of the container comprises:
   lifting the container; and
   transporting the container along a rail system of the automated storage and retrieval system to a port column comprising the port.
6. A method according to item 6, comprising, before lifting the container, sequentially lifting and redepositing containers having been above the container in the column of containers.
7. A method according to any preceding item, wherein the opening of the door comprises movement of the door by a drive mechanism.
8. A method according to any preceding item, wherein a height of the container is equal or greater than 1m, and optionally wherein a height of the container is at least 2m and equal to or less than 3m.
9. A method according to any preceding item, wherein a height of the container is greater than a height of at least one of the other containers of the column of containers.
10. A robot comprising:
   a body;
   a lifting device configured to lift a container, hold the container and lower the container, the container having a height equal to or greater than 1m; and
   a set of wheels configured for moving the robot on a rail system of an automated storage and retrieval system while the robot retains the container.
11. A robot according to item 10, wherein the lifting device comprises a gripping device configured to retain the container by holding it such that a lower surface of the container is held at a greater vertical height than a bottom of the set of wheels.
12. A robot according to item 10 or item 11, wherein the robot comprises a cantilever element configured to retain the container underneath the cantilever element.
13. A robot according to item 10 or item 11, comprising an internal cavity within the body configured to retain the container therewithin.
14. A robot according to any of items 10-13, wherein the height of the container is at least 2m and equal to or less than 3m.
15. A port coupled to an automated storage and retrieval system, the port comprising:
   an opening in a side of the automated storage and retrieval system; and
   a frame surrounding the opening,
   wherein the opening is configured to provide side access to a container positioned adjacent to the opening, the container having a vertical height equal to or greater than 1m.
16. A port according to item 15, wherein the height of the container is at least 2m and equal to or less than 3m.
17. A port according to item 15 or item 16, wherein a height of the opening between lower and upper portions of the frame is at least 1m, and optionally wherein the height of the opening between the lower and upper portions of the frame is at least 2m and equal to or less than 3.
18. A container configured to be stacked in a column of containers in an automated storage and retrieval system, the container comprising:
   a vertical height of at least 1m; and
   a door on a first side of the container configured to provide access to an interior of the container.
19. A container according to item 18, wherein the vertical height of the container is at least 2m and equal to or less than 3m.
20. A container according to item 18 or item 19, comprising a rack configured to support an item within the interior of the container.

## Claims

1. A container configured to be stacked in a column of containers in an automated storage and retrieval system, the container comprising:
a rack configured to support an item within an interior of the container; and
a door on a first side of the container configured to provide access to the interior of the container.

2. A container according to claim 1, wherein the rack is configured to support the item at a non-zero height above a bottom surface of the container.

3. A container according to claim 1 or claim 2, wherein the rack comprises a horizontal element coupled to a second side of the container and coupled to a third side of the container, the second side being opposite to the third side.

4. A container according to any preceding claim, wherein the rack comprises at least one rail configured for hanging the item therefrom.

5. A container according to any preceding claim, wherein the rack comprises at least one shelf or at least one drawer for supporting the item.

6. A container according to any preceding claim, wherein the rack comprises at least one fastener for holding the item in a fixed position.

7. A container according to any preceding claim, wherein the rack comprises multiple rack elements, each of the rack elements being configured to support a respective item at a different respective height within the container.

8. A container according to any preceding claim, wherein a height of the container is equal to or greater than 1m.

9. A container according to any preceding claim, wherein a height of the container is at least 2m and equal to or less than 3m.

10. A container according to any preceding claim, wherein the door is slidable in a vertical direction.

11. A container according to claim 10, wherein the door is configured to slide to a predetermined vertical position dependent on a vertical position of the item within the container.

12. An automated storage and retrieval system comprising:
the container of any preceding claim;
a port configured to provide side access to the container; and
a robot configured to transport the container to the port.

13. An automated storage and retrieval system according to claim 12, comprising a plurality of additional containers, wherein the container and the plurality of additional containers are stacked vertically on top of each other.

14. An automated storage and retrieval system according to claim 13, wherein a height of the container is greater than a height of at least one of the plurality of additional containers.

15. An automated storage and retrieval system according to any of claims 12-14, comprising a platform adjacent to the port, wherein the robot is configured to lower the container a predetermined distance dependent on a vertical position of the item within the container.
